# EUROPEAN PATENT APPLICATION

(11) **EP 2 413 543 A1**
(43) Date of publication of application: **01.02.2012**
(21) Application number: 10290432.3
(22) Date of filing: 30.07.2010
(51) Int. Cl.: H04L 12/56

(54) **Binary search method for congestion avoidance**

(71) Applicant: INSTITUT NATIONAL DE RECHERCHE EN INFORMATIQUE ET EN AUTOMATIQUE, 78153 Le ChesnayCédex (FR); Alcatel Lucent, 75007 Paris (FR)
(72) Inventor: Blanc, Alberto, 06600 Antibes (FR); Alouf Huet, Sara, 06600 Antibes (FR); Avrachenkov, Konstantin, 06160 Juan les Pins (FR); Post, Georg, 91620 Nozay (FR)
(74) Representative: Demulsant, Xavier

(57) **Abstract**

A method for packet flow rate control within a network node (4) receiving at least a traffic flow from a sender (1), comprising the following steps:
- computing the average rate at the end of a cycle comprising an initial value of packet number;
- updating the value of packet number per cycle in function of the computed average rate with respect to a target flow rate.

## Description

### FIELD OF THE INVENTION

The invention relates generally to flow management through network nodes and more particularly to congestion avoidance through a network node within a packet-switched communication network.

### BACKGROUND OF THE INVENTION

A shared network node among a plurality of end users is usually faced to jointly carry a plurality of concurrent downloads of diverse traffic patterns ranging from short-lived connections - often called "mice'' flows - to long-lived ones (large file transfers) - often called "elephants" flows. Emerging trends in network applications (Web navigation, instant messaging, electronic messaging, Peer-to-Peer, elearning, video conferencing, VoIP, remote communication, online games) amplify as ever such matter.

In particular, these heterogeneous connections competing to be routed through a same network node challenge the network resources available thereon without any concern on fairness issue, making congestions inevitable. In fact, when demands of concurrent connections toward a network node exceed the availability of network resources thereon (bandwidth, input/output line-cards, and buffers capacities for example), the network node experiences congestion. It operates in high loss rate state (dropping and/or marking packets) causing damages for guaranteeing Quality-of-Service (QoS) and performances decrease.

Hence, as safeguard policy, overloads and bursts of traffic should be avoided as possible within network nodes.

To that end, different congestion control schemes have been described in the literature. One can mention TCP congestion control (TCP Reno) and Random Early Detection (RED) methods.

RED, the most widely deployed in current routers, maintains a long term average of the queue length (buffer occupancy) of a router using a low-pass filter. Then, it operates with regard to predefined thresholds:
- if this average queue length falls below a certain minimum threshold, all packets are admitted into the queue;
- if the average queue length exceeds a certain maximum threshold, all incoming packets are dropped; and
- if the queue length lies between the minimum and maximum thresholds, incoming packets are dropped/marked with a linearly increasing probability up to a maximum drop probability value.

Further versions of RED, namely an adaptive version, are proposed so as to self-adjust the critical parameters thereof and/or to stabilize the average queue length within buffers.

Nevertheless, diverse problems remain unsolved or even arise with congestion management within network nodes. In fact, up-to-date methods for dropping/marking packets on buffer overflow are frequently reduced to an Active Queue Management (AQM) procedure that drops - or better marks if Explicit Congestion Notification (ECN) is enabled - the packets before the buffer fills up.

In fact, more problems arise with regards to the sender-receiver of the carried traffic as they may
- use different algorithms (TCP Reno, Cubic, Compound TCP for example) and have different access rates (an optical access rate may be in the Gbps range for example);
- open large numbers of connections in parallel, intending to (unfairly) boost their bandwidth share (for example, the application FlashGet permits such practice).

Moreover, up-to-date network nodes treat the packet-switched communications network traffic as equal and do not differentiate between mice and elephants flows (while short connections, generally, expect relatively faster service than long connections), nor distinguish between users' more or less aggressive rate-increase policies.

Furthermore, several shortcomings of current congestion control methods remain manifestly perceptible as many parameters should be taken into account:
- the number of active flows: the stability margins of tuned parameters vary over orders of magnitude with the changing number of active flows;
- the utilized network resources per flow: the high-bandwidth aggressive flows can introduce long time constants in the system, namely the cycle time between drops;
- the elephants flows: the end-point TCP protocol accepts a growing number of various rate-increase algorithms to accelerate the high-bandwidth, long-distance flows. The problem is to tune the controller at the node level, so as it will handle potentially ever more aggressive traffic profiles, including those associated with elephants flows and novel elastic sender-rate controllers;
- the QoS: for QoS reasons, the queue sizes in routers should be kept small. The buffer occupancy no longer provides a reliable metric to define a control scheme. Instead, the data rate of flows or aggregates, or the percentages of link utilization, may become the preferred controllable quantities.

Accordingly, network nodes operating under variable traffic loads require smart flow rate control so as to avoid and/or mitigate congestion, while maximizing the network node throughput under QoS and fairness constraints.

Further, end-point devices support the Explicit Congestion Notification (ECN) bit, making it attractive to have a more graceful congestion management than drop-tail. This means a reliable, self-tuning version of preventive packet-marking in all highly loaded (intermediate) nodes, so that the total ratio of dropped packets can be greatly reduced, even for highspeed connections transferring large files. Instead of queue growth under incipient congestion, the monitored rates can become the primary controlled quantities.

One object of the present invention is to overcome at least some of the aforementioned problems and to offer advantages over the prior art.

Another object of the present invention is to provide a self-adaptive congestion avoidance method and system.

Another object of the present invention is to propose a router-assisted scheme for congestion avoidance.

Another object of the present invention is to provide a flow-aware congestion avoidance method able to maintain a shared network node at a good operating point by avoiding congestion thereon.

Another object of the present invention is to ameliorate the quality of service supported by a shared network node.

Another object of the present invention is that a shared network utilizes allocated resources thereof at its best for TCP traffic.

Another object of the present invention is to propose an algorithm able to maintain a network node at a fair state.

Another object of the present invention is to refine drop mechanisms while flow rates are kept under control.

### DESCRIPTION OF THE DRAWING

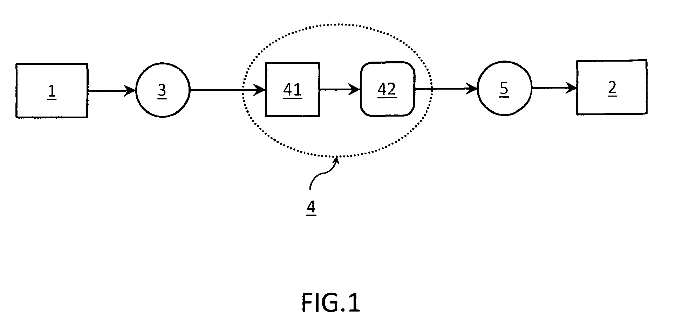

The objects, advantages and other features of the present invention will become more apparent from the following disclosure and claims. The following non-restrictive description of preferred embodiments is given for the purpose of exemplification only with reference to the accompanying drawing in which figure 1 is a block diagram showing an illustrative embodiment.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

The present invention relates to a method for packet flow rate control within a network node receiving at least a traffic flow from a sender, comprising the following steps:
- computing the average rate at the end of a cycle comprising an initial value of packet number;
- updating the value of packet number per cycle in function of the
   computed average rate with respect to a target flow rate.

The present invention further relates to a system for flow rate control system within a network node receiving at least a traffic flow from a sender, configured to
- compute the average rate at the end of a cycle comprising an initial value of packet number;
- update the value of packet number per cycle in function of the computed average rate with respect to a target rate.

The present invention further relates to a computer program product adapted to perform the method cited above.

While the invention is susceptible to various modifications and alternative forms, one specific embodiment thereof has been shown by way of example in the drawing. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those of ordinary skill in the art having the benefit of this disclosure.

### DETAILED DESCRIPTION OF ILLUSTRATIVE EMBODIMENTS

With reference to figure 1, there is shown, a sender 1 and a receiver 2 interconnected through a network connection (for example a TCP, UDP, DCCP, RTP, or SCTP connection, or more generally, any network connection including a protocol of the transport layer) involving a plurality of network nodes 3-5. We assume that at least a long-lived connection (an elephant flow) is established between the sender 1 and the receiver 2 and passes through the network node 4. A router, a switch, a gateway, a host, or a server, are examples of the network node 4.

The node 4 comprises a flow aware adaptive rate management system that include
- a flow classification means 41 of individual flows or aggregates; and
- a flow rate control system 42.

The flow classification means 41 is in charge of
- distinguishing flows on different quality of service classes; and
- detecting elephants flows with their respective state information such as the transmission rate (by using token-bucket meters, packet counters, byte counters, packet times, or mark-event times for example).

Main functions of the flow rate control system 42 are described in reference to the pseudo code below.

The flow rate control system 42 is configured to stabilize buffer level and/or link rate carrying elephants flows so the network node 4 is prevented from congestion. To that end, the flow rate control system
- fixes an initial value *n* that represents the number of packets received by the flow rate control system 42 during a cycle. A cycle refers here to the time interval between two successive mark or drop events occurred in the controlled node 4;
- computes the average rate only at the end of each cycle; and
- based on the computed average rate, updates the value of *n*. The update of *n* per cycle aims at adaptively adjusting the number of packets in each cycle so as to avoid congestion.

It is worth noting that is preferable to fix at first a "large enough" value for *n*, that is a value for which the corresponding average rate is larger than a target rate.

To proceed, the flow rate control system 42
- starts from an arbitrary value while in initialization step (n=100 for example);
- uses this value *n* for one cycle in order to find the corresponding average rate;
- if the founded average rate is larger than a target rate, has just found an upper bound, otherwise double this value (i.e. *n*=200) and use it for one cycle.

In other words, the flow rate control system 42 computes the average rate at the end of a cycle comprising an initial value of packet number, then it updates the value of packet number per cycle in function of the computed average rate with respect to a target flow rate.

The above process is repeated until a large enough value of *n* is found. Meanwhile, three variables: *lo, mid* and *hi* may be used to keep track of the current search interval:
- the variable *lo* contains a value of *n* which is known to be too small (i.e., for which the corresponding average rate is smaller than the target rate);
- mid keeps track of the last value of *n* being tested; and
- *hi* keeps track of the smallest value of *n* which is currently known to be an upper bound (i.e., for which the corresponding average rate is larger than the target rate).

Once the algorithm converges to a certain value of *n*, that is when either *mid* = *lo* or *mid = hi,* the *converged* flag is set to TRUE. The following cycle, the same value of *n* is used again and, if the average rate is not sufficiently close to the target rate the *converged* flag is set to FALSE. Then, if the average rate is above the target rate, *lo* is set to 0 and the process starts again on the interval [0, *n*]. Otherwise, if the average rate is below the target rate, the process starts again by first finding a value of *n* which is large enough.

When the value of *n* is changed, *n* should then be kept unchanged until the system converges to a new steady state. It takes some cycles for the sending window to stabilize, so that it oscillates between two constant values. As an example, a comparison of the last two values of the average rate can be made to conclude that the system has converged if the relative difference between these two values is "small" enough. This can advantageously be done also when changing from one value of *n* to another, i.e. that if the average rate does not change significantly, the steady state average rates, corresponding to these two values of *n*, are fairly close to each other, therefore there is no need to wait for the system to reach a new steady state.

The procedure of the pseudo code PROCESSPKT(e), given below, is called every time a packet is received, with *p* being the packet. This procedure returns TRUE if a congestion signal should be sent and FALSE otherwise.

Each flow has a set of variables associated with it (using a C++ data structure for example). For the sake of simplicity the pseudo code does not explicitly reference this data structure, but all the variables (e.g., *avgRate, targetRate, n for example)* are member of this data structure.

In order to regulate the bandwidth of individual flows or any aggregate of elastic flows, the flow rate control system 42 triggers a congestion signal whenever a congestion is about to occur, i.e., the average rate computed at the end of a cycle comprising *n* packets is above a target rate. Accordingly, packets are dropped and/or marked before buffer overflow, by giving an early warning to the sender 1.

In an embodiment, leaky bucket schemes of flow-rate shaping are used with the disclosed method. In fact, known flow policing devices leaky buckets (or closely related token buckets) may be combined with the disclosed flow regulation technique. As in the proposed method, the large aggressive flows (elephants flows) Flow[i] (i = 1, 2, ...) are admitted with maximal target rates Rmax[i], dynamically derived from the fair bandwidth controller. Then, the packet arrivals of each flow may be monitored with a leaky bucket tuned to Rmax[i] and an appropriate burst size Burst[i]. In other words, a plurality of flows constrained to individual Rmax[i] may be simultaneously managed.

Advantageously, hardware implementation of the herein enclosed embodiments may re-use existing leaky bucket filters. In addition to color marking, they can simultaneously implement the measurement of rates R[i], the average rate of flow or aggregate number i, between two successive mark/drop events for that flow.

The flow rate control system 42 permits, at a small processing effort, to maintain the cumulative rate below a target value. It confers the node 4 a self-tuning ability (via mark/drop strategies on individual TCP connections) as a function of traffic patterns, without operator assistance.

In congestion, fairness arbitration may happen between compound flows, e.g. the sum of all flows having the same source and destination. With the rate control mechanisms, proposed here, any policy of equalizing the bandwidth-delay products (or more generally some product: rate x power of RTT) can be enforced. The flow-aware node frequently has the goal to enhance the relative QoS of mice versus elephants and so will not interfere with any flow that has, for example, ten packets or less, setting up control state variables only for longer lasting flows.

The flow-aware mechanism finds its best application when a significant part of the traffic is carried by persistent, elastic elephants flows with TCP-friendly behavior.

With such algorithm, the amount of data between successive mark/drop is deterministic per flow, not a noisy random value. Instead of physical queue average size, the controlled quantities are rates, or link utilization, or virtual queue values (token buckets).

Persons skilled in the art will readily appreciate how these teachings are independent of the data transfer protocol and/or the communication network type (whatever a local or a global Area Network).

The proposed flow-rate control method may be part of a cascade of several controls, to implement collective and individual target rates and fairness policies.

The integration of the herein described method brings a plurality of advantages,
- fair scheduling, computing and distributing a rate quota to each aggressive elephant flow. In fact, the per-flow classification information may be used to fairly partition the network resources (the available bandwidth). Then, mice connections can receive a priority boost by not being marked and dropped;
- self-tuning scheme. In fact, the proposed flow-control method permits an autonomic self-adaptation to expected and unexpected traffic changes and the precise control of fairness among elephants flows;
- stability as the proposed system converges to a programmable target flow rate and/or link load, allowing the operator to tune the overall Quality-of-service of carried traffic.

An illustrative pseudo code of the above method is as follows:

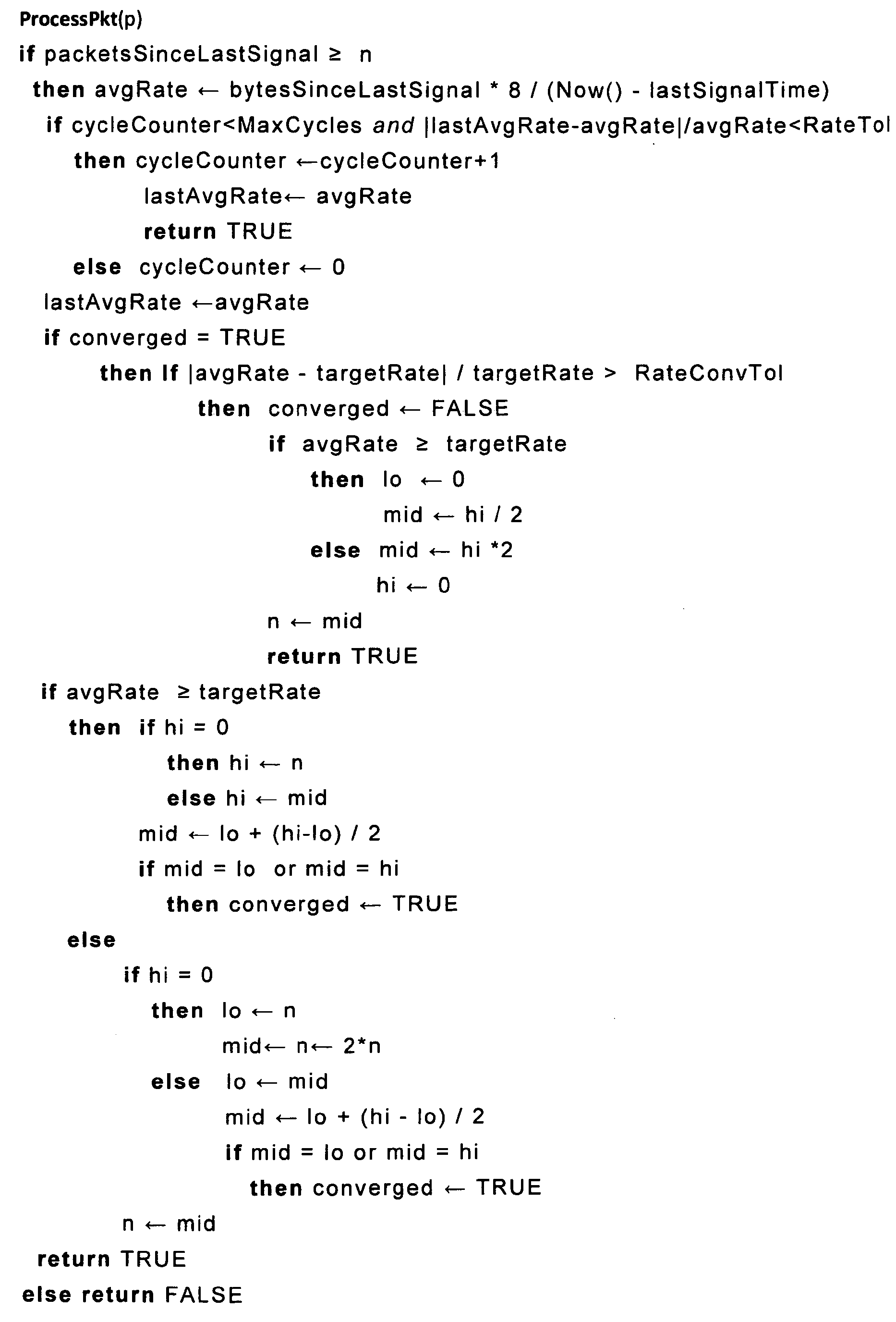

A second method, described in a patent application entitled "Flow-aware congestion avoidance method and system" (A. Blanc, K. Avrachenkov, S. Alouf, G. Post) filed by the same applicants at the same time as the present one, aims to adaptively adjust the number of packets that pass through a network node per cycle. To that end, at every packet arrival
- the average arrival rate since the last congestion signal was sent (i.e., since the beginning of the cycle) is computed;
- a congestion signal is sent as soon as this rate is above a predefined target rate;
- congestion signal sending is repeated until the sender receives at least a congestion signal and, consequently, reacts by reducing the sending rate.

Depending on the network support of Explicit Congestion Notification (ECN), two variants of this method are also proposed.

It is to be noted that this second method may be utilized to initialize the herein disclosed method by giving an estimation of the initial value of packet number per cycle, permitting to speed up the convergence.

## Claims

1. A method for packet flow rate control within a network node (4) receiving at least a traffic flow from a sender (1), comprising the following steps:
- computing the average rate at the end of a cycle comprising an initial value of packet number;
- updating the value of packet number per cycle in function of the computed average rate with respect to a target flow rate.

2. The method of claim 1, wherein the updating step is repeated until the convergence towards a value of packet number corresponding to the target rate.

3. The method of any of claims 1 or 2, wherein a congestion signal is triggered, whenever the computed average rate is above a target rate.

4. The method of any of claims 1 to 3, further comprising a leaky bucket filtering step.

5. A system (42) for flow rate control within a network node (4) receiving at least a traffic flow from a sender (1), configured to
- compute the average rate at the end of a cycle comprising an initial value of packet number;
- update the value of packet number per cycle in function of the computed average rate with respect to a target rate.

6. A computer program including instructions stored on a memory of a computer and/or a dedicated system, wherein said computer program is adapted to perform the method as claimed in preceding claims 1 to 4.
